# EUROPÄISCHE PATENTSCHRIFT

(11) **EP 0 976 677 B1**
(45) Veröffentlichungstag und Bekanntmachung des Hinweises auf die Patenterteilung: **15.01.2003**
(21) Anmeldenummer: 99112363.9
(22) Anmeldetag: 28.06.1999
(51) Int. Cl.: B67D 5/37

(54) **Vorrichtung zum Befüllen von Behältern**
Device for filling containers
Dispositif de remplissage de récipients

(30) Priorität: 31.07.1998 DE 19834671; 03.05.1999 DE 19920234
(43) Veröffentlichungstag der Anmeldung: 02.02.2000
(73) Patentinhaber: SIEMENS AKTIENGESELLSCHAFT, 80333 München (DE)
(72) Erfinder: Neufert, Ronald, Dr.rer.nat., 96247 Michelau (DE)

(56) Entgegenhaltungen:
- WO-A-00/30935
- DE-A- 3 535 946
- DE-A- 19 729 003

## Beschreibung

Die Erfindung bezieht sich auf ein Vorrichtung zum Befüllen von zwei Behältern einer Anlage, insbesondere zum Befüllen eines Kraftstofftanks und eines von diesem umfassten Reduktionsmitteltanks.

Im Zuge der Entwicklung immer umweltschonenderer Brennkraftmaschinen wurden reduktionsmittelbetriebene Abgasreinigungsanlagen entwickelt. Eine derartige Anlage ist beispielsweise aus dem Siemens-Firmenprospekt "SiNOx-Stickoxidminderung für stationäre Dieselmotoren", Bestell-Nr. A96001-U91-A232, Siemens AG, Berlin und München, bekannt. Hierbei handelt es sich um eine Anlage, die auf einem SCR (Selective Catalytic Reduction)-Verfahren basiert. Dieses Verfahren nutzt den Effekt, wonach Stickoxide oder Harnstoff an geeigneten Katalysatoren zu Stickstoff und Wasser umgesetzt werden. Dazu werden die Abgase unter genau dosierter Zugabe eines Reduktionsmittels durch den SCR-Katalysator geleitet, der in die Abgasleitung integriert ist.

Bei einer reduktionsmittelbetriebenen Abgasreinigungsanlage, die mit einer abgasliefernden Verbrennungskraftanlage - z.B. mit einem Dieselmotor auf einem Kraftfahrzeug - zusammenarbeitet, ist die Bevorratung des Reduktionsmittels in einem Vorratsbehälter, Tank oder Reduktionsmittelraum erforderlich. Dieser Raum war bisher in einiger Entfernung und getrennt vom Kraftstoffraum angeordnet, der zur Bevorratung des Kraftstoffs für die Verbrennungsanlage vorgesehen ist. Ein festes Reduktionsmittel, wie z.B. Harnstoff, ist dabei u.a. aus Gründen einer guten Dosierbarkeit in einer Flüssigkeit, z.B. in Wasser, gelöst. Derartige Reduktionsmittellösungen kristallisieren und erstarren bei Temperaturen, die im Fahrzeug und bei Außenaufstellung des Reduktionsmitteltanks unterschritten werden können. Beispielsweise erstarrt eine 32,5%ige Harnstoff-Wasser-Lösung bei -11°C. Eine eingefrorene oder erstarrte Lösung kann nicht mehr gefördert werden und das Abgas wird in einem solchen Fall nicht gereinigt.

Insbesondere bei einem Fahrzeug, bei dem eine solche reduktionsmittelbetriebene Abgasreinigungsanlage eingesetzt wird, besteht die Notwendigkeit der Unterbringung des Vorratsbehälters für das Reduktionsmittel. Durch die DE 197 29 003 A1 ist nun kürzlich vorgeschlagen worden, den Vorratsbehälter für das Reduktionsmittel innerhalb eines zur Verbrennungskraftanlage gehörenden Kraftstofftanks anzuordnen. Dabei sind zum Befüllen des Vorratsbehälters und des Kraftstofftanks voneinander unabhängige und räumlich getrennte Einfüllöffnungen vorgesehen. Auch Lagertanks, aus denen Kraftstoff bzw. Reduktionsmittel gezapft werden, sind üblicherweise räumlich voneinander entfernt aufgestellt. Zur Betankung einer Verbrennungskraftanlage der obengenannten Art sind daher zwei voneinander unabhängige Tankvorgänge erforderlich.

In der DE 35 35 946 A1 ist eine Zapfpistole zum gleichzeitigen Einfüllen zweier unterschiedlicher Flüssigkeiten in getrennte Behälter beschrieben. Die Zapfpistole besteht aus einem Hahnkörper mit zwei Einlassstutzen und zwei Auslassstutzen, die durch von Hand betätigbare Durchflussventile verbunden sind, und aus druckabhängigen Schalteinrichtungen zum selbsttätigen Schließen bei gefüllten Behältern. Zur unverwechselbaren Zuordnung der beiden Auslassstutzen zu den jeweiligen Behältern sind diese unter Einbeziehung der Behältereinfüllstutzen unterschiedlich gestaltet.

Der Erfindung liegt daher die Aufgabe zugrunde, die Akzeptanz von Anlagen der obengenannten Art dadurch zu erhöhen, dass der Zeitaufwand für ihre Befüllung (Betankung) verringert wird.

Diese Aufgabe wird für Behälter (Tanks) der eingangs genannten Art erfindungsgemäß durch die Merkmale des Patentanspruchs 1 gelöst.

Gemäß zweckmäßigen Weiterbildungen erfolgt die Befüllung mindestens eines der beiden Behälter über einen flüssigkeitsund/oder gasdichten Anschluss und erfolgt eine Entlüftung während einer Befüllung über einen von dem zur Befüllung vorgesehenen Anschluss parallelen Entlüftungsstutzen, wobei aus dem Entlüftungsstutzen austretende Gase gefiltert werden. Außerdem werden dabei möglicherweise aus einem der Behälter verdrängte, durch einen Einfüllstutzen austretende Gase von einer Absaugeinrichtung aufgenommen.

Bei einer bevorzugten Weiterbildung der Vorrichtung ist bei unterschiedlich großen Leitungsquerschnitten der Anschlüsse der Anschluss mit dem kleineren Leitungsquerschnitt flüssigkeits- und/oder gasdicht ausgeführt, wobei die Auslassrohre in der Zapfpistole unterschiedlich lang sind und das kürzere Auslassrohr den kleineren Leitungsquerschnitt aufweist.

Gemäß einer besonders vorteilhaften Ausgestaltung dienen die Behälter als Kraftstoff- bzw. als Reduktionsmitteltank in einem Kraftfahrzeug, wobei das längere Auslassrohr zur Befüllung des Kraftstofftanks, beispielsweise mit Dieselkraftstoff, und das kürzere Auslassrohr zur Befüllung des Reduktionsmitteltanks, beispielsweise mit einer Harnstofflösung, dient.

Nach zweckmäßigen Weiterbildungen der Vorrichtung ist sowohl das kürzere Auslassrohr in der Zapfpistole als auch der zugeordnete behälterseitige Einfüllstutzen mit je einer selbstschließenden Einrichtung versehen, die sich erst beim Einführen des Auslassrohres in dem Einfüllstutzen öffnen. Dabei sind die selbstschließenden Einrichtungen bajonettverschlussartig ausgeführt und ist der behälterseitige Einfüllstutzen mit dem kleineren Leitungsquerschnitt am Grund eines Führungskonus angeordnet. Außerdem ist die Zapfpistole mit ihren zwei Auslassrohren von einer Saugglocke umfasst.

Die mit der Erfindung erzielten Vorteile bestehen insbesondere darin, dass durch gleichzeitiges Befüllen zweier Behälter (Tanks) der zur Befüllung beider Behälter erforderliche Zeitaufwand deutlich verringert ist, und dass unangenehme Begleitumstände, z.B. eine Beschmutzung der Bedienperson, auf ein erträgliches oder sogar auf ein unerhebliches Mindestmaß zurückgeführt sind.

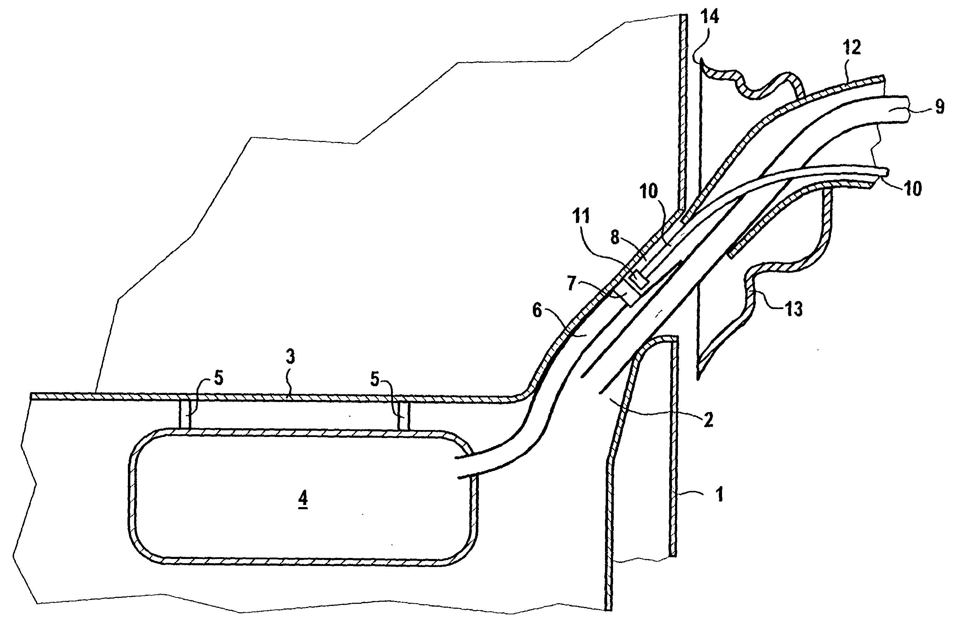

Nachfolgend wird ein Ausführungsbeispiel der Erfindung anhand einer Zeichnung näher erläutert. Darin zeigt die einzige Figur im Schnitt die Situation im behälterseitigen Bereich von Einfüllstutzen bei in diese eingeführter Zapfpistole.

Dargestellt ist eine Seitenwand 1 eines nicht näher gezeigten Kraftfahrzeugs. An der Seitenwand 1 mündet ein Einfüllstutzen 2 eines nur teilweise gezeichneten Behälters 3 für Dieselkraftstoff. Innerhalb des Behälters 3 ist für ein Reduktionsmittel, beispielsweise für eine wässrige Lösung von Harnstoff, ein Behälter 4 vorgesehen, der beim Ausführungsbeispiel an Streben 5 unter einer oberen Wand des Behälters 3 aufgehängt ist.

Eine Be- und Entlüftung des Behälters 4 erfolgt über eine nicht dargestellte Anschlussleitung, die in eine ebenfalls nicht dargestellte Filteranordnung mündet. Ein Einfüllstutzen 6 für den Behälter 4 ist in dem Einfüllstutzen 2 an dessen oberer Wand entlanggeführt und endet in einer selbstschließenden Einrichtung 7. Diese ist in nicht näher dargestellter Art und Weise als Bajonettverschluss ausgeführt und im Boden eines Führungskonus 8 gehalten.

In den Einfüllstutzen 2 ist ein Auslassrohr 9 für Dieselkraftstoff eingeführt. Strömungstechnisch parallel zum Auslassrohr 9 ist ein Auslassrohr 10 für das Reduktionsmittel angeordnet. Das freie Ende des Auslassrohres 10 ist mit einer selbstschließenden Einrichtung 11 versehen, die wiederum in nicht näher dargestellter Art und Weise als Bajonettverschluss ausgeführt ist. Die beiden Auslassrohre 9 und 10 sind in einer einzigen Zapfpistole 12 zusammengefasst, die eine diese umfassende Saugglocke 13 trägt.

Zum Einleiten einer Befüllung der Behälter 3 und 4 wird die Zapfpistole 12 so weit in den Einfüllstutzen 2 eingeführt, dass die Einrichtung 11 in die Einrichtung 7 eindringt und eine flüssigkeits- und gasdichte Verbindung des Auslassrohres 10 mit dem Einfüllstutzen 6 herstellt. In dieser Stellung ragt das Auslassrohr 9 weit in den Einfüllstutzen 2 hinein und liegt die Saugglocke 13 mit einer sehr weich ausgeführten umlaufenden Lippe 14 an der Seitenwand 1. Nunmehr werden Ventile in der Zapfpistole 12 geöffnet, so dass gleichzeitig Kraftstoff durch das Auslassrohr 9 in den Behälter 3 und Reduktionsmittel durch das Auslassrohr 10 in den Behälter 4 übertritt.

Jedes der Ventile ist mit einer üblichen Automatik ausgestattet, die ein Überfüllen eines der Behälter 3 oder 4 verhindert. Die Ventile sind aber auch je für sich einzeln von Hand betätigbar, so dass die Befüllung der Behälter 3 und 4 einzeln und bei jedem beliebigen Füllstand abbrechbar ist. Solange eines der Ventile geöffnet ist und die Saugglocke 13 an der Seitenwand 1 liegt, wird über eine nicht dargestellte Leitung in der Saugglocke 13 ein gegenüber der Umgebung geringerer Druck aufrecht erhalten, so dass aus dem Behälter 3 verdrängtes Gas oder möglicherweise durch eine Undichtigkeit an den Einrichtungen 7 oder 11 ausgetretene Dämpfe abgesaugt werden und nicht in die Umgebungsluft gelangen.

Durch Abschließen aller Ventile in der Zapfpistole 12 wird der Befüllvorgang beendet und die Zapfpistole 12 wird aus dem Einfüllstutzen 2 herausgezogen. Dabei lösen sich auch die selbstschließenden Einrichtungen 7 und 11 voneinander und verhindern durch ihren selbsttätigen Verschluss ein Austreten von Reduktionsmittel aus dem Einfüllstutzen 6 oder aus dem Auslassrohr 10.

Die Vorrichtung ist vorteilhaft in allen Fällen einsetzbar, in denen mehr als ein Stoff einer Anlage zuzuführen ist. Diese Vorrichtung ist insbesondere nicht auf ihre Anwendung bei zwei zu füllenden Behältern beschränkt, sondern auch zum gleichzeitigen Befüllen von mehr als zwei Behältern geeignet.

## Patentansprüche

1. Vorrichtung zum gleichzeitigen Befüllen von zwei Behältern (3,4) einer Anlage, umfassend eine Zapfpistole (12) mit zwei Auslassrohren (9,10) und behälterseitige Einfüllstutzen (2, 6), wobei
sowohl die behälterseitigen Einfüllstutzen (2,6) als auch die diesen zugeordneten Auslassrohre (9,10) in der Zapfpistole (12) zu je einer Baugruppe zusammengefasst sind, **dadurch gekennzeichnet, dass** eines der Auslassrohre (9, 10) und der zugeordnete Einfüllstutzen (2, 6) mit je einer selbstschließenden Einrichtung (7,11) versehen sind, die sich erst beim Einführen des Auslassrohres (9, 10) in den Einfüllstutzen (2, 6) öffnen.

2. Vorrichtung nach Anspruch 1,
**dadurch gekennzeichnet, dass** bei unterschiedlich großen Leitungsquerschnitten von Anschlüssen der Anschluss mit dem kleineren Leitungsquerschnitt flüssigkeitsund/oder gasdicht ausgeführt ist.

3. Vorrichtung nach Anspruch 1 oder 2,
**dadurch gekennzeichnet, dass** die Auslassrohre (9,10) in der Zapfpistole (12) unterschiedlich lang sind.

4. Vorrichtung nach Anspruch 3,
**dadurch gekennzeichnet, dass** das kürzere Auslassrohr (10) den kleineren Leitungsquerschnitt hat.

5. Vorrichtung nach einem der Ansprüche 1 bis 4,
**dadurch gekennzeichnet, dass** die Behälter (3,4) als Kraftstoff- bzw. als Reduktionsmitteltank in einem Kraftfahrzeug dienen.

6. Vorrichtung nach einem der Ansprüche 3 bis 5,
**dadurch gekennzeichnet, dass** das längere Auslassrohr (9) zur Befüllung des Kraftstofftanks, beispielsweise mit Dieselkraftstoff, und das kürzere Auslassrohr (10) zur Befüllung des Reduktionsmitteltanks, beispielsweise mit einer Harnstofflösung, dient.

7. Vorrichtung nach einem der Ansprüche 1 bis 6,
**dadurch gekennzeichnet, dass** die selbstschließenden Einrichtungen (11,7) bajonettverschlussartig ausgeführt sind.

8. Vorrichtung nach einem der Ansprüche 1 bis 7,
**dadurch gekennzeichnet, dass** der behälterseitige Einfüllstutzen (6) mit dem kleineren Leitungsquerschnitt am Grund eines Führungskonus (8) angeordnet ist.

9. Vorrichtung nach einem der Ansprüche 1 bis 8,
**dadurch gekennzeichnet, dass** die Zapfpistole (12) mit ihren zwei Auslassrohren (9,10) von einer Saugglocke (13) umfasst ist.

## Claims

1. A device for simultaneously filling two containers (3, 4) of a system, comprising a pump nozzle (12) with two outlet pipes (9, 10) and container-side filler necks (2, 6), both the container-side filler necks (2, 6) and the outlet pipes (9, 10) associated therewith in the pump nozzle (12) being combined in each case to form an assembly,
**characterised in that** one of the outlet pipes (9, 10) and the associated filler neck (2, 6) are provided in each case with a self-closing device (7, 11) opening only when the outlet pipe (9, 10) is introduced into the filler neck (2, 6).

2. A device according to claim 1,
**characterised in that**, in the event of the connections having line cross sections of different sizes, the connection having the smaller line cross section is constructed to be liquid- and/or gas-tight.

3. A device according to claim 1 or claim 2,
**characterised in that** the outlet pipes (9, 10) in the pump nozzle (12) have different lengths.

4. A device according to claim 3,
**characterised in that** the shorter outlet pipe (10) has the smaller line cross section.

5. A device according to one of claims 1 to 4,
**characterised in that** the containers (3, 4) serve respectively as fuel and reducing agent tanks in a motor vehicle.

6. A device according to one of claims 3 to 5,
**characterised in that** the longer outlet pipe (9) serves in filling the fuel tank, for example with diesel fuel, and the shorter outlet pipe (10) serves in filling the reducing agent tank, for example with a urea solution.

7. A device according to one of claims 1 to 6,
**characterised in that** the self-closing devices (11, 7) are constructed in the manner of a bayonet fastening.

8. A device according to one of claims 1 to 7,
**characterised in that** the container-side filler neck (6) having the smaller line cross section is disposed at the bottom of a guide cone (8).

9. A device according to one of claims 1 to 8,
**characterised in that** the pump nozzle (12), together with its two outlet pipes (9, 10), is surrounded by a suction bell (13).

## Revendications

1. Dispositif pour le remplissage simultané de deux récipients (3, 4) d'une installation, comprenant un pistolet distributeur (12) ayant deux tuyaux de sortie (9, 10) et ayant deux embouts de remplissage (2, 6) côté récipient, dans lequel aussi bien les embouts de remplissage (2, 6) côté récipient que les tuyaux de sortie (9, 10) associés à ceux-ci dans le pistolet distributeur (12) sont réunis en un élément,
**caractérisé par le fait que** l'un des tuyaux de sortie (9, 10) et l'embout de remplissage associé (2, 6) sont munis chacun d'un dispositif de fermeture automatique (7, 11) qui s'ouvre seulement lors de l'introduction du tuyau de sortie (9, 10) dans l'embout de remplissage (2, 6).

2. Dispositif selon la revendication 1,
**caractérisé par le fait que**, si les sections transversales de conduit de raccords sont de grandeurs différentes, le raccord ayant la plus petite section de conduit est réalisé de façon étanche au liquide et/ou au gaz.

3. Dispositif selon la revendication 1 ou 2,
**caractérisé par le fait que** les tuyaux de sortie (9, 10) dans le pistolet distributeur (12) sont de longueurs différentes.

4. Dispositif selon la revendication 3,
**caractérisé par le fait que** le plus court tuyau de sortie (10) a la plus petite section transversale de conduit.

5. Dispositif selon l'une des revendications 1 à 4,
**caractérisé par le fait que** les récipients (3, 4) servent de réservoir de carburant et de réservoir d'agent de réduction dans un véhicule automobile.

6. Dispositif selon l'une des revendications 3 à 5,
**caractérisé par le fait que** le plus long tuyau de sortie (9) sert au remplissage du réservoir de carburant, par exemple avec du gasoil, et le plus court tuyau de sortie (10) sert au remplissage du réservoir d'agent de réduction, par exemple avec une solution de carbamide.

7. Dispositif selon l'une des revendications 1 à 6,
**caractérisé par le fait que** les dispositifs à fermeture automatique (11, 7) sont réalisés comme des fermetures à baïonnette.

8. Dispositif selon l'une des revendications 1 à 7,
**caractérisé par le fait que** l'embout de remplissage (6) qui est côté récipient et qui a la plus petite section transversale de conduit est placé au fond d'un cône de guidage (8).

9. Dispositif selon l'une des revendications 1 à 8,
**caractérisé par le fait que** le pistolet distributeur (12) avec ses deux tuyaux de sortie (9, 10) est entouré par une cloche d'aspiration (13).
